(19) Europäisches Patentamt
European Patent Office
Office européen des brevets

(11) **EP 3 652 112 B1**

(12) **EUROPEAN PATENT SPECIFICATION**

(45) Date of publication and mention
of the grant of the patent:
**19.05.2021 Bulletin 2021/20**

(51) Int Cl.:
***C01G 53/00*** $^{(2006.01)}$

(21) Application number: **18734601.0**

(86) International application number:
**PCT/EP2018/068301**

(22) Date of filing: **05.07.2018**

(87) International publication number:
**WO 2019/011786 (17.01.2019 Gazette 2019/03)**

(54) **PROCESS FOR MAKING AN ELECTRODE ACTIVE MATERIAL**

VERFAHREN ZUR HERSTELLUNG EINES ELEKTRODENAKTIVMATERIALS

PROCÉDÉ DE FABRICATION D'UN MATÉRIAU ACTIF D'ÉLECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2017 EP 17181404**

(43) Date of publication of application:
**20.05.2020 Bulletin 2020/21**

(73) Proprietor: **BASF SE**
**67056 Ludwigshafen am Rhein (DE)**

(72) Inventors:
• **ERK, Christoph**
**67056 Ludwigshafen (DE)**
• **RYLL, Thomas Michael**
**67056 Ludwigshafen (DE)**
• **VOLKOV, Aleksei**
**67056 Ludwigshafen (DE)**
• **LONG, Brandon Ray**
**Beachwood, Ohio 44122 (US)**
• **HAAG, Jacob**
**Beachwood, Ohio 44122 (US)**

(74) Representative: **BASF IP Association**
**BASF SE**
**GBI-C006**
**67056 Ludwigshafen (DE)**

(56) References cited:
EP-A1- 3 093 272     WO-A1-2016/204563
US-A1- 2013 108 926

**Description**

The present invention is directed towards a process for making an electrode active material according to general formula $Li_{1-x}TM_{1-x}O_2$, wherein TM is a combination of Mn, Co and Ni in combination with at least one more metal M selected from Al, Ti, and W, wherein at least 60 mole-% of TM is Ni, the percentage referring to the sum of Ni, Co and Mn, and x is in the range of from zero to 0.2, said process comprising the following steps:

(a) mixing

(A) a mixed oxide or oxyhydroxide of Mn, Co and Ni, and
(B) at least one lithium compound selected from lithium hydroxide, lithium oxide and lithium carbonate, and
(C) an oxide, hydroxide or oxyhydroxide of Al, Ti or W,

(b) subjecting said mixture to heat treatment at a temperature in the range of from 700 to 1000°C.

Lithiated transition metal oxides are currently being used as electrode active materials for lithium-ion batteries. Extensive research and developmental work has been performed in the past years to improve properties like charge density, specific energy, but also other properties like the reduced cycle life and capacity loss that may adversely affect the lifetime or applicability of a lithium-ion battery. Additional effort has been made to improve manufacturing methods.

Many electrode active materials discussed today are of the type of lithiated nickel-cobalt-manganese oxide ("NCM materials").

In a typical process for making cathode materials for lithium-ion batteries, first a so-called precursor is being formed by co-precipitating the transition metals as carbonates, oxides or preferably as hydroxides that may or may not be basic. The precursor is then mixed with a lithium salt such as, but not limited to LiOH, $Li_2O$ or - especially - $Li_2CO_3$ - and calcined (fired) at high temperatures. Lithium salt(s) can be employed as hydrate(s) or in dehydrated form. The calcination - or firing - generally also referred to as thermal treatment or heat treatment of the precursor - is usually carried out at temperatures in the range of from 600 to 1,000 °C. During the thermal treatment a solid state reaction takes place, and the electrode active material is formed. In cases hydroxides or carbonates are used as precursors the solid state reaction follows a removal of water or carbon dioxide. The thermal treatment is performed in the heating zone of an oven or kiln.

All three documents EP 3 093 272 A1, US 2013/108926 A1 and WO 2016/204563 A1 disclose such processes.

Dopants such as aluminum, titanium or tungsten in NCM materials positively influence the stability of such NCM materials with respect to cycling stability and area specific resistance. Such stability may be impaired by $Li_2CO_3$ either stemming from unreacted lithium carbonate as starting material or being formed through carbon dioxide uptake by the basic electrode active material.

It was therefore an objective of the present invention to provide a method for making an electrode active material with high cycling stability. In particular, it was an objective of the present invention to provide a method for making an electrode active material with low $Li_2CO_3$ content.

Accordingly, the process as defined at the outset has been found, hereinafter also defined as inventive process or as process according to the current invention. The inventive process shall be described in more detail below.

The inventive process is a process for making an electrode active material according to general formula $Li_{1+x}TM_{1-x}O_2$, wherein TM is a combination of Mn, Co and Ni in combination with at least one more metal M selected from Al, Ti, and W, wherein at least 60 mole-% of TM is Ni, the percentage referring to the sum of Ni, Co and Mn, and x is in the range of from zero to 0.2, preferably 0.01 to 0.05, said process comprising the following steps, hereinafter in brief also referred to as step (a) and step (b), respectively.

Step (a) includes mixing

(A) a mixed oxide or oxyhydroxide of Mn, Co and Ni, hereinafter also referred to as oxyhydroxide (A) or oxide (A), respectively, or altogether as precursor (A), and
(B) at least one lithium compound selected from lithium hydroxide, lithium oxide and lithium carbonate, hereinafter also referred to as lithium salt (B) or lithium compound (B), and
(C) an oxide, hydroxide or oxyhydroxide of Al, Ti or W, hereinafter also referred to as compound (C),

wherein at least 60 mole-% of TM is Ni, referring to the sum of Ni, Co and Mn.

In one embodiment of the present invention, precursor (A) is obtained by co-precipitation of a mixed hydroxide of nickel, cobalt and manganese, followed by drying under air and partial or full dehydration.

Precursor (A) may be obtained by co-precipitating nickel, cobalt and manganese as hydroxides followed by drying in an atmosphere containing oxygen and a thermal pre-treatment in an atmosphere containing oxygen.

Precursor (A) is preferably obtained by co-precipitating nickel, cobalt and manganese as hydroxides from an aqueous solution containing nitrates, acetates or preferably sulfates of nickel, cobalt and manganese in a stoichiometric ratio corresponding to TM. Said co-precipitation is effected by the addition of alkali metal hydroxide, for example potassium hydroxide or sodium hydroxide, in a continuous, semi-continuous or batch process. Said co-precipitation is then followed by removal of the mother liquor, for example filtration, and subsequent removal of water.

It is even more preferred that TM in the targeted electrode active material is the same as TM in precursor (A) plus the metal M, see below.

The removal of water is preferably performed in at least two sub-steps at different temperatures, for example 80 to 150°C in sub-step 1 and 165 to 600°C in sub-step 2.

In one embodiment of the present invention, the removal of water is performed in different apparatuses. Sub-step 1 is preferably performed in a spray dryer, in a spin-flash dryer or in a contact dryer. Sub-step 2 may be performed in a rotary kiln, a roller heath kiln or in a box kiln.

Precursor (A) is in particulate form. In one embodiment of the present invention, the mean particle diameter (D50) of precursor (A) is in the range of from 6 to 12 $\mu$m, preferably 7 to 10 $\mu$m. The mean particle diameter (D50) in the context of the present invention refers to the median of the volume-based particle diameter, as can be determined, for example, by light scattering.

The particle shape of the secondary particles of precursor (A) is preferably spheroidal, that are particles that have a spherical shape. Spherical spheroidal shall include not just those which are exactly spherical but also those particles in which the maximum and minimum diameter of at least 90% (number average) of a representative sample differ by not more than 10%.

In one embodiment of the present invention, precursor (A) is comprised of secondary particles that are agglomerates of primary particles. Preferably, precursor (A) is comprised of spherical secondary particles that are agglomerates of primary particles. Even more preferably, precursor (A) is comprised of spherical secondary particles that are agglomerates of spherical primary particles or platelets.

In one embodiment of the present invention, precursor (A) may have a particle diameter distribution span in the range of from 0.5 to 0.9, the span being defined as [(D90) - (D10)] divided by (D50), all being determined by LASER analysis. In another embodiment of the present invention, precursor (A) may have a particle diameter distribution span in the range of from 1.1 to 1.8.

In one embodiment of the present invention the surface (BET) of precursor (A) is in the range of from 2 to 10 m$^2$/g, determined by nitrogen adsorption, for example in accordance with to DIN-ISO 9277:2003-05.

In one embodiment of the present invention precursor (A) may have a homogeneous distribution of the transition metals nickel, cobalt and manganese over the diameter of the particles. In other embodiments of the present invention, the distribution of at least two of nickel, cobalt and manganese is non-homogeneous, for example exhibiting a gradient of nickel and manganese, or showing layers of different concentrations of at least two of nickel, cobalt and manganese. It is preferred that precursor (A) has a homogeneous distribution of the transition metals over the diameter of particles.

In one embodiment of the present invention, precursor (A) may contain elements other than nickel, cobalt and manganese, for example titanium, aluminum, zirconium, vanadium, tungsten, molybdenum, niobium or magnesium, for example in amounts of 0.1 to 5% by mole, referring to TM. However, it is preferred that precursor (A) only contains negligible amounts of elements other nickel, cobalt and manganese, for example detection level up to 0.05% by mole.

Precursor (A) may contain traces of metal ions, for example traces of ubiquitous metals such as sodium, calcium, iron or zinc, as impurities but such traces will not be taken into account in the description of the present invention. Traces in this context will mean amounts of 0.05 mol-% or less, referring to the total metal content of TM.

In one embodiment of the present invention, precursor (A) contains one or more impurities such as residual sulphate in case such precursor has been made by co-precipitation from a solution of one or more sulphates of nickel, cobalt and manganese. The sulphate may be in the range of from 0.1 to 0.4% by weight, referring to the entire precursor (A).

In one embodiment of the present invention, TM is of the general formula (I)

$$(Ni_aCo_bMn_c)_{1-d}M_d \qquad (I)$$

with

> a being in the range of from 0.6 to 0.85, preferably 0.6 to 0.7,
> b being in the range of from 0.05 to 0.2, preferably 0.1 to 0.2,
> c being in the range of from 0.05 to 0.2, preferably 0.1 to 0.2, and
> d being in the range of from 0.005 to 0.1,
> and M is Al, and

$$a + b + c = 1.$$

In a preferred embodiment of the present invention, at least 60 mole-% of TM is Ni, for example 60 to 95 mole-%, more preferably 60 to 90 mole% and even more preferably 60 to 80 mole-%, the percentage in each case referring to the sum of Ni, Co and Mn. Specific examples are $Ni_{0.5}Co_{0.2}Mn_{0.3}$, $Ni_{0.6}Co_{0.2}Mn_{0.2}$, $Ni_{0.8}Co_{0.1}Mn_{0.1}$, and $Ni_{0.7}Co_{0.2}Mn_{0.1}$.

In one embodiment of the present invention, precursor (A) is an oxide or oxyhydroxide of TM, and the resultant electrode active material is $Li_{1+x}TM_{1-x}O_2$, wherein TM in precursor (A) is the same with respect to the amounts of transition metals as in the electrode active material minus M selected from Al, Ti, and W, as the case may be.

As precursor (A), oxyhydroxides with a residual moisture content in the range of from 0.1 to 50 % by weight are particularly feasible. In the context of precursor (A), the moisture content is calculated as g $H_2O$ per 100 g of precursor (A). In this case, $H_2O$ may be bound chemically as hydroxyl group, or be bound by physisorption. It is preferred that the residual moisture in precursor (A) is low, for example 0.1 to 5 % by weight. Even more preferably, precursor (A) is an oxide of TM with no detectable amounts of residual moisture.

Examples of lithium compound (B) are $Li_2O$, LiOH, and $Li_2CO_3$, each water-free or as hydrate, if applicable, for example $LiOH \cdot H_2O$. Preferred example is lithium hydroxide.

Lithium compound (B) is preferable in particulate form, for example with an average diameter (D50) in the range of from 3 to 10 $\mu$m, preferably from 5 to 9 $\mu$m.

Compound (C) may serve as source of dopant. Compound (C) is selected from oxides, hydroxides and oxyhydroxides of Ti, W and especially of Al. Lithium titanate is also a possible source of titanium. Examples of compounds (C) are $WO_3$, $TiO_2$ selected from rutile and anatase, anatase being preferred, furthermore basic titania such as $TiO(OH)_2$, furthermore $Li_4Ti_5O_{12}$, $WO_3$, $Al(OH)_3$, $Al_2O_3$, $Al_2O_3 \cdot aq$, and AlOOH. Preferred are Al compounds such as $Al(OH)_3$, $\alpha$-$Al_2O_3$, $\gamma$-$Al_2O_3$, $Al_2O_3 \cdot aq$, and AlOOH. Even more preferred compounds (C) are $Al_2O_3$ selected from $\alpha$-$Al_2O_3$, $\gamma$-$Al_2O_3$, and most preferred is $\gamma$-$Al_2O_3$.

In one embodiment of the present invention compound (C) may have a surface (BET) In the range of from 1 to 200 $m^2$/g, preferably 50 to 150 $m^2$/g. The surface BET may be determined by nitrogen adsorption, for example according to DIN-ISO 9277:2003-05.

In one embodiment of the present invention, compound (C) is nanocrystalline. Preferably, the average crystallite diameter of compound (C) is 100 nm at most, preferably 50 nm at most and even more preferably 15 nm at most. The minimum diameter may be 4 nm.

In one embodiment of the present invention, compound (C) is a particulate material with an average diameter (D50) in the range of from 1 to 10 $\mu$m, preferably 2 to 4 $\mu$m. Compound (C) is usually in the form of agglomerates. Its particle diameter refers to the diameter of said agglomerates.

In a preferred embodiment, compound (C) is applied in an amount of up to 1.5 mole % (referred to the sum of Ni, Co and Mn), preferably 0.1 up to 0.5 mole %.

Examples of suitable apparatuses for performing step (a) are high-shear mixers, tumbler mixers, plough-share mixers and free fall mixers.

In one embodiment of the present invention, step (a) is performed at a temperature in the range of from ambient temperature to 200°C, preferably 20 to 50°C.

In one embodiment of the present invention, step (a) has a duration of 10 minutes to 2 hours. Depending on whether additional mixing is performed in step (b) or not, thorough mixing has to be accomplished in step (a).

Mixing of precursor (A), lithium compound (B) and compound (C) may be performed all in one or in sub-steps, for example by first mixing lithium compound (B) and compound (C) and adding such mixture to precursor (A), or by first mixing precursor (A) and lithium compound (B) and then adding compound (C), or by first mixing compound (C) and precursor (A) and then adding lithium compound (B). It is preferred to first mix precursor (A) and lithium compound (B) and to then add compound (C).

Although it is possible to add an organic solvent, for example glycerol or glycol, or water in step (a) it is preferred to perform step (a) in the dry state, that is without addition of water or of an organic solvent.

A mixture is obtained.

Step (b) includes subjecting said mixture to heat treatment at a temperature in the range of from 700 to 1000°C, preferably 750 to 925°C.

In one embodiment of the present invention, the mixture of precursor (A) and lithium compound (B) and residual (C) and, optionally, solvent(s), is heated to 700 to 1000 °C with a heating rate of 0.1 to 10 °C/min.

In one embodiment of the present invention, the temperature is ramped up before reaching the desired temperature of from 700 to 1000°C, preferably 750 to 900°C. For example, first the mixture of precursor (A) and lithium compound (B) and compound (C) is heated to a temperature to 350 to 550°C and then held constant for a time of 10 min to 4 hours, and then it is raised to 700°C up to 1000°C.

In embodiments wherein in step (a) at least one solvent has been used, as part of step (b), or separately and before commencing step (b), such solvent(s) are removed, for example by filtration, evaporation or distilling of such solvent(s). Preferred are evaporation and distillation.

In one embodiment of the present invention, step (b) is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment of the present invention, step (b) is performed in an oxygen-containing atmosphere, for example in a nitrogen-air mixture, in a rare gas-oxygen mixture, in air, in oxygen or in oxygen-enriched air. In a preferred embodiment, the atmosphere in step (b) is selected from air, oxygen and oxygen-enriched air. Oxygen-enriched air may be, for example, a 50:50 by volume mix of air and oxygen. Other options are 1:2 by volume mixtures of air and oxygen, 1:3 by volume mixtures of air and oxygen, 2:1 by volume mixtures of air and oxygen, and 3:1 by volume mixtures of air and oxygen.

In one embodiment of the present invention, step (b) of the present invention is performed under a stream of gas, for example air, oxygen and oxygen-enriched air. Such stream of gas may be termed a forced gas flow. Such stream of gas may have a specific flow rate in the range of from 0.5 to 15 $m^3/h \cdot kg$ material according to general formula $Li_{1+x}TM_{1-x}O_2$. The volume is determined under normal conditions: 298 Kelvin and 1 atmosphere. Said stream of gas is useful for removal of gaseous cleavage products such as water and carbon dioxide.

The inventive process may include further steps such as, but not limited, additional calcination steps at a temperature in the range of from 500 to 1000°C subsequently to step (b).

In one embodiment of the present invention, step (b) has a duration in the range of from one hour to 30 hours. Preferred are 10 to 24 hours. The cooling time is neglected in this context.

After thermal treatment in accordance to step (b), the electrode active material so obtained is cooled down before further processing.

By performing the inventive process electrode active materials with excellent properties are available through a straightforward process. Preferably, the electrode active materials so obtained have a surface (BET) in the range of from 0.1 to 0.8 $m^2/g$, determined according to DIN-ISO 9277:2003-05.

In one embodiment of the present invention, it can be detected that especially Al is uniformly distributed in electrode active material obtained according to the inventive process, without accumulations.

The invention is further illustrated by working examples.

Example 1:

A stirred tank reactor was filled with deionized water and 49 g of ammonium sulfate per kg of water. The solution was tempered to 55°C and a pH value of 12 was adjusted by adding an aqueous sodium hydroxide solution.

The co-precipitation reaction was started by simultaneously feeding an aqueous transition metal sulfate solution and aqueous sodium hydroxide solution at a flow rate ratio of 1.8, and a total flow rate resulting in a residence time of 8 hours. The transition metal solution contained Ni, Co and Mn at a molar ratio of 8:1:1 and a total transition metal concentration of 1.65 mol/kg. The aqueous sodium hydroxide solution was a 25 wt.% sodium hydroxide solution and 25 wt.% ammonia solution in a weight ratio of 6. The pH value was kept at 12 by the separate feed of an aqueous sodium hydroxide solution. Beginning with the start-up of all feeds, mother liquor was removed continuously. After 33 hours all feed flows were stopped. The mixed transition metal (TM) oxyhydroxide precursor (A.1) was obtained by filtration of the resulting suspension, washing with distilled water, drying at 120°C in air and sieving.

The mixed transition metal (TM) oxyhydroxide precursor obtained as described above, composition of $Ni_{0.8}Co_{0.1}Mn_{0.1}$, was mixed with $WO_3$ and with LiOH monohydrate to obtain a concentration of 1.0 mole-% W relative to Ni+Co+Mn+W and a Li/(Ni+Co+Mn+W) molar ratio of 1.03. The mixture was heated to 800°C and kept for 6 h in a forced flow of oxygen. Cathode active material CAM.1 so obtained was tested as described below.

In addition, CAM.1 showed excellent cycling stability at a temperature of 45°C.

Comparative example 1:

The mixed transition metal oxyhydroxide precursor was prepared as described in Ex. 1 but an aqueous solution of sodium tungstate was added continuously to the stirred tank reactor, resulting in co-precipitation of 1 mole-% of tungsten referring to the um of Ni, Co, and Mn. Precursor C-(A.1) was obtained.

Precursor C-(A.1) was mixed with LiOH monohydrate in a Li/(Ni+Co+Mn+W) ratio of 1.03 and the mixture was heated in the same way as in Example 1. Comparative cathode active material C-CAM.1 was obtained. C-CAM.1 exhibits much lower capacity and cycling stability than CAM.1.

Example 2:

Precursor (A.1) was mixed with $TiO_2$ and LiOH monohydrate to obtain a concentration of 0.3 mole-% Ti relative to Ni+Co+Mn+Ti and a Li/(Ni+Co+Mn+Ti) molar ratio of 1.03. The resultant mixture was treated thermally in the same way as in Example 1. Cathode active material CAM.2 was obtained.
In addition, CAM.2 showed excellent cycling stability at a temperature of 45°C.

Example 3:

Example 3 was performed in the same way as Example 2 except that instead of $TiO_2$, $Li_4Ti_5O_{12}$ was added together with LiOH monohydrate and the Ti concentration and the Li/(Ni+Co+Mn+Ti) ratios were adjusted in accordance with Example 2. Cathode active material CAM.3 was obtained.

Comparative Example 2:

The mixed transition metal oxyhydroxide precursor was prepared as described in Example 1 but 0.4 mole-% of Ti was added as $TiOSO_4$ to the slurry and co-precipitated at the end of the co-precipitation process. Precursor C-(A.2) was obtained.
Precursor C-(A.2) was mixed with LiOH monohydrate to obtain a Li/(TM+Ti) ratio of 1.03 and the mixture was heated in the same way as in Example 1. Comparative cathode active material C-CAM.2 was obtained. C-CAM.2 exhibits much lower capacity and cycling stability than CAM.2 or CAM.3.

Comparative Example 3:

A mixed transition metal oxyhydroxide precursor was prepared as described in Example 1 but 0.2 mole-% of Ti was added as $TiOSO_4$ to the slurry and co-precipitated at the end of the co-precipitation process. Precursor C-(A.3) was obtained.
Precursor C-(A.3) was mixed with LiOH monohydrate to obtain a Li/(TM+Ti) ratio of 1.03 and the mixture was heated in the same way as in Example 1. Comparative cathode active material C-CAM.3 was obtained. C-CAM.3 exhibits much lower 1st cycle capacity and cycling stability than CAM.2 or CAM.3.

Example 4:

A stirred tank reactor was filled with deionized water. The precipitation of mixed transition metal hydroxide precursor was started by simultaneous feed of an aqueous transition metal solution and an alkaline precipitation agent at a flow rate ratio of 1.8, and a total flow rate resulting in a residence time of 8 hours. The transition metal solution contained Ni, Co and Mn at a molar ratio of 8:1:1 and a total transition metal concentration of 1.65 mol/kg. The alkaline precipitation agent consisted of 25 wt.% sodium hydroxide solution and 25 wt.% ammonia solution in a weight ratio of 6. The pH was kept at 12.7 by separate feed of an aqueous sodium hydroxide solution. After stabilization of particle size the resulting suspension was removed continuously from the stirred vessel. The mixed transition metal (TM) oxyhydroxide precursor was obtained by filtration of the resulting suspension, washing with distilled water, drying at 120°C in air and sieving.
The mixed transition metal oxyhydroxide precursor obtained as described above, composition $Ni_{0.8}CO_{0.1}Mn_{0.1}$, was mixed with $Al_2O_3$, average particle diameter 6 nm, and LiOH monohydrate to obtain a concentration of 0.3 mole-% Al relative to Ni+Co+Mn+AL and a Li/(TM+AL) molar ratio of 1.03. The mixture was heated to 800°C and kept for 6 h in a forced flow of oxygen. CAM.4 was obtained. The residual lithium carbonate was determined and the electrochemical testing was carried out in coin half cells to obtain a 1st cycle discharge capacity.

Comparative example 4:

The mixed transition metal oxyhydroxide precursor was prepared as described in Example 4 but 0.3 mole-% of Al was added as sodium aluminate to the reaction mixture and co-precipitated. Precursor C-(A.4) was obtained.
Precursor C-(A.4) was mixed with LiOH monohydrate to obtain a Li/(TM+AL) ratio of 1.03 and the mixture was heated in the same way as in Example 4. Comparative cathode active material C-CAM.4 was obtained. C-CAM.4 exhibits a lower capacity than CAM.4 and, in addition, a significantly higher amount of residual Li species.

Example 5:

Example 5 was carried out in the same way as Example 4 but $Al_2O_3$, average particle diameter 6 nm, was added to obtain a concentration of 1.0 mole-% Al relative to Ni+Co+Mn+Al %. CAM.5 was obtained. Results are shown in Table 1.

Comparative example 5:

Comparative Ex. 5 was carried out according to Comparative Example 4 but 1.0 mole-% of Al was added as sodium aluminate to the precursor during precipitation. Precursor C-(A.5) was obtained.
Precursor C-(A.5) was mixed with LiOH monohydrate to obtain a Li/(TM+AL) ratio of 1.03 and the mixture was heated in the same way as in Example 4. Comparative cathode active material C-CAM.5 was obtained. Results are shown in Table 1.

Testing, general method

The electrochemical testing was carried out accordingly in coin half cells to obtain a 1st cycle discharge capacity as depicted in Table.1
To produce a cathode, the following ingredients were blended under stirring with one another until a lump-free paste was obtained:
4 g of active material, 2.7 g of a 10 wt.-% solution of polyvinylidene difluoride ("PVdF"), commercially available as Kynar HSV 900 from Arkema Group, dissolved in N-ethylpyrrolidone (NEP), 0.134 g carbon black, BET surface area of 62 $m^2$/g, commercially available as "Super C 65" from Imerys, 0.133 g graphite, commercially available as "SFG6L" from Imerys, 2.02 g of additional NEP.
Cathodes were prepared as follows: On a 20 μm thick aluminum foil, the above paste was applied with a doctor blade until a thickness of about 28 μm after drying (about 7.5 mg of active material/cm$^2$. The electrode foil was calendered to a density of the coating layer of about 3 g/cm$^3$. Disc-shaped cathodes with a diameter of 20 mm were punched out of the foil. The cathode discs were then weighed, dried for 16 hours in a vacuum oven at 105°C and introduced into an argon glove box without exposure to ambient air. Then, cells with the cathodes were built.
Electrochemical testing was conducted in coin-type cells. The electrolyte used was 300 μl of a 1 M solution of $LiPF_6$ in dimethyl carbonate / ethylene carbonate (weight ratio 1:1).
Anode: lithium, separated from the cathode by a glass-fiber separator.

Table 1: Properties of cathode materials according to examples and comparative examples

|  | Element added | 1st cycle discharge capacity |
|---|---|---|
| CAM.1 | 1.0% W | 184.5 |
| CAM.2 | 0.3% Ti | 195.2 |
| CAM.3 | 0.3% Ti | 194.0 |
| CAM.4 | 0.3% Al | 192.9 |
| CAM.5 | 1.0% Al | n.d. |
| C-CAM.1 | 1.0% W | 157.2 |
| C-CAM.2 | 0.4% Ti | 164.1 |
| C-CAM.3 | 0.2% Ti | 189.0 |
| C-CAM.4 | 0.3% Al | 185.3 |
| C-CAM.5 | 1.0 % Al | n.d. |
| n.d.: not determined | | |

The 1st cycle discharge capacity was determined at 0.1C and 3.0 to 4.3V (mA·h/g)

**Claims**

1. Process for making an electrode active material according to general formula $Li_{1+x}TM_{1-x}O_2$, wherein TM is a combination of Mn, Co and Ni in combination with at least one more metal M selected from Al, Ti, and W, wherein at least 60 mole-% of TM is Ni, the percentage referring to the sum of Ni, Co and Mn, and x is in the range of from zero to 0.2, said process comprising the following steps:

   (a) mixing

      (A) a mixed oxide or mixed oxyhydroxide of Mn, Co and Ni, and
      (B) at least one lithium compound selected from lithium hydroxide, lithium oxide and lithium carbonate, and
      (C) an oxide, hydroxide or oxyhydroxide of Al, Ti or W,

   (b) subjecting said mixture to heat treatment at a temperature in the range of from 700 to 1000°C.

2. Process according to claim 1 wherein TM in the electrode active material is a combination of metals according to general formula (I)

$$(Ni_aCo_bMn_c)_{1-d}M_d \qquad (I)$$

   with

      a being in the range of from 0.6 to 0.85,
      b being in the range of from 0.05 to 0.2,
      c being in the range of from 0.05 to 0.2, and
      d being in the range of from 0.005 to 0.1,
      and M is Al, and

$$a + b + c = 1.$$

3. Process according to claim 1 or 2 wherein said mixing in step (a) is performed in the dry state.

4. Process according to any of the preceding claims wherein step (b) is performed in a rotary kiln or roller hearth kiln.

5. Process according to any of the preceding claims wherein (C) is $Al_2O_3$.

6. Process according to any of the preceding claims wherein (A) is an oxide of Mn, Co and Ni.

7. Process according to any of the preceding claims wherein precursor (A) is obtained by co-precipitation of a mixed hydroxide of nickel, cobalt and manganese, followed by drying under air and dehydration.

8. Process according to any of the preceding claims wherein the electrode active material has a surface (BET) in the range of from 0.1 to 0.8 $m^2/g$, determined according to DIN-ISO 9277:2003-05.


**Patentansprüche**

1. Verfahren zur Herstellung eines Elektrodenaktivmaterials gemäß der allgemeinen Formel $Li_{1+x}TM_{1-x}O_2$, wobei TM für eine Kombination von Mn, Co und Ni in Kombination mit mindestens einem Metall M, das aus Al, Ti und W ausgewählt ist, steht, wobei es sich bei mindestens 60 Mol-% von TM um Ni handelt, wobei sich die Prozentangabe auf die Summe von Ni, Co und Mn bezieht, und x im Bereich von null bis 0,2 liegt, wobei das Verfahren die folgenden Schritte umfasst:

   (a) Mischen von

      (A) mindestens einem Mischoxid oder Mischoxyhydroxid von Mn, Co und Ni und
      (B) mindestens einer Lithiumverbindung, die aus Lithiumhydroxid, Lithiumoxid und Lithiumcarbonat ausgewählt ist, und
(C) einem Oxid, Hydroxid oder Oxyhydroxid von Al, Ti oder W,

(b) Wärmebehandeln der Mischung bei einer Temperatur im Bereich von 700 bis 1000 °C.

2. Verfahren nach Anspruch 1, wobei es sich bei TM in dem Elektrodenaktivmaterial um eine Kombination von Metallen gemäß der allgemeinen Formel (I)

$$(Ni_aCo_bMn_c)_{1-d}M_d \qquad (I)$$

handelt, wobei

a im Bereich von 0,6 bis 0,85 liegt,
b im Bereich von 0,05 bis 0,2 liegt,
c im Bereich von 0,05 bis 0,2 liegt und
d im Bereich von 0,005 bis 0,1 liegt
und M für Al steht und

$$a + b + c = 1.$$

3. Verfahren nach Anspruch 1 oder 2, wobei man das Mischen in Schritt (a) im trockenen Zustand durchführt.

4. Verfahren nach einem der vorhergehenden Ansprüche, wobei man Schritt (b) in einem Drehofen oder einem Rollenherdofen durchführt.

5. Verfahren nach einem der vorhergehenden Ansprüche, wobei es sich bei (C) um $Al_2O_3$ handelt.

6. Verfahren nach einem der vorhergehenden Ansprüche, wobei es sich bei (A) um ein Oxid von Mn, Co und Ni handelt.

7. Verfahren nach einem der vorhergehenden Ansprüche, wobei man Vorstufe (A) durch Copräzipitation eines Mischoxids von Nickel, Cobalt und Mangan und anschließendes Trocknen an der Luft und Dehydratisierung erhält.

8. Verfahren nach einem der vorhergehenden Ansprüche, wobei das Elektrodenaktivmaterial eine gemäß DIN-ISO 9277:2003-05 bestimmte Oberfläche (BET) im Bereich von 0,1 bis 0,8 $m^2/g$ aufweist.


**Revendications**

1. Procédé pour la préparation d'un matériau actif d'électrode selon la formule générale $Li_{1+x}TM_{1-x}O_2$, TM étant une combinaison de Mn, Co et Ni en combinaison avec au moins un métal de plus M choisi parmi Al, Ti, et W, au moins 60 % en moles de TM étant Ni, le pourcentage faisant référence à la somme de Ni, Co et Mn, et x étant dans la plage allant de zéro à 0,2, ledit procédé comprenant les étapes suivantes :

(a) mélange

(A) d'un oxyde mixte ou d'un oxyhydroxyde mixte de Mn, Co et Ni, et
(B) d'au moins un composé du lithium choisi parmi l'hydroxyde de lithium, l'oxyde de lithium et le carbonate de lithium, et
(C) d'un oxyde, d'un hydroxyde ou d'un oxyhydroxyde de Al, Ti, ou W,

(b) soumission dudit mélange à un traitement thermique à une température dans la plage allant de 700 à 1 000 °C.

2. Procédé selon la revendication 1, TM dans le matériau actif d'électrode étant une combinaison de métaux selon la formule générale (I)

$$(Ni_aCo_bMn_c)_{1-d}M_d \qquad (1)$$

a étant dans la plage allant de 0,6 à 0,85,
b étant dans la plage allant de 0,05 à 0,2,
c étant dans la plage allant de 0,05 à 0,2, et
d étant dans la plage allant de 0,005 à 0,1,
M étant Al, et

$$a + b + c = 1.$$

3.  Procédé selon la revendication 1 ou 2, ledit mélange dans l'étape (a) étant réalisé à l'état sec.

4.  Procédé selon l'une quelconque des revendications précédentes, l'étape (b) étant réalisée dans un four rotatif ou dans un four à sole à rouleau.

5.  Procédé selon l'une quelconque des revendications précédentes, (C) étant $Al_2O_3$.

6.  Procédé selon l'une quelconque des revendications précédentes, (A) étant un oxyde de Mn, Co et Ni.

7.  Procédé selon l'une quelconque des revendications précédentes, le précurseur (A) étant obtenu par co-précipitation d'un hydroxyde mixte de nickel, de cobalt et de manganèse, suivie par un séchage à l'air et une déshydratation.

8.  Procédé selon l'une quelconque des revendications précédentes, le matériau actif d'électrode possédant une surface (BET) dans la plage allant de 0,1 à 0,8 $m^2$/g, déterminée selon la norme DIN-ISO 9277:2003-05.

**EP 3 652 112 B1**

## REFERENCES CITED IN THE DESCRIPTION

**Patent documents cited in the description**

- EP 3093272 A1
- US 2013108926 A1

- WO 2016204563 A1